# EUROPEAN PATENT APPLICATION

(11) **EP 1 988 531 A1**
(43) Date of publication of application: **05.11.2008**
(21) Application number: 07714544.9
(22) Date of filing: 20.02.2007
(51) Int. Cl.: G09G 3/28, G09G 3/20, H04N 5/66

(54) **METHOD FOR DRIVING PLASMA DISPLAY PANEL, AND PLASMA DISPLAY**

(30) Priority: 24.02.2006 JP 2006048240
(71) Applicant: MATSUSHITA ELECTRIC INDUSTRIAL CO., LTD., Osaka 571-8501 (JP)
(72) Inventor: TAKEDA, Minoru, 2-1-61 Shiromi, Chuo-ku, Osaka-shi, Osaka 540-6207 (JP); KIGO Shigeo, 2-1-61 Shiromi, Chuo-ku, Osaka-shi, Osaka 540-6207 (JP); KAWASE Tooru, 2-1-61 Shiromi, Chuo-ku, Osaka-shi, Osaka 540-6207 (JP); TANIGUCHI Hironari, 2-1-61 Shiromi, Chuo-ku, Osaka-shi, Osaka 540-6207 (JP)
(74) Representative: Pautex Schneider, Nicole Véronique
(86) International application number: PCT/JP2007/053018
(87) International publication number: WO 2007/097297

(57) **Abstract**

A plasma display panel driving method is provided in which one field of an image signal includes a plurality of sub fields each having an initialization period, an address period and a sustain period, one field period includes an all-cell initialization sub field in which an initializing discharge is generated by applying an initialization voltage to all the discharge cells to display the image in the initialization period, the initialization voltage can be varied, and the initialization voltage when an image satisfying predetermined conditions is displayed is set to be lower than an initialization voltage when an image satisfying no predetermined conditions is displayed.

## Description

### TECHNICAL FIELD

The present invention relates to a method of driving a plasma display panel used for a wall-mounted TV or a large monitor, and a plasma display apparatus.

### BACKGROUND ART

An alternating current surface discharge panel which is representative of a plasma display panel (hereinafter, abbreviated as "panel") has a plurality of discharge cells formed between a front substrate and a rear substrate which face each other.

The front substrate has a plurality of pairs of display electrodes formed in parallel on a front glass substrate, each pair being composed of a scan electrode and a sustain electrode, and a dielectric layer and a protective layer that cover the pairs of display electrodes. The rear substrate has a plurality of parallel data electrodes on a rear glass substrate, a dielectric layer covering the data electrodes, a plurality of barrier ribs formed in parallel to the data electrodes on the dielectric layer, and a phosphor layer formed on a surface of the dielectric layer and sides of the barrier ribs.

The front substrate faces the rear substrate in such a manner that the pairs of display electrodes intersect the data electrodes in three dimensions, and a discharge space defined between the front substrate and the rear substrate are sealed. The discharge space is filled with discharge gas that contains xenon at a partial pressure ratio of 5%, for example. Discharge cells are formed at portions where the pairs of display electrodes face the data electrodes. In the panel constructed so, ultraviolet rays are generated by gas discharging in the discharge cells, and a color image is displayed by exciting phosphors of red (R), green (G) and blue (B) color with the ultraviolet rays to emit light from the phosphors.

As one of methods of driving the panel, it is common to use a sub field method of dividing one field period into a plurality of sub fields and expressing gray scales by combination of luminous sub fields.

Each of the sub fields has an initialization period, an address period and a sustain period. In the initialization period, an initializing discharge is generated and wall charges required for subsequent address operation are formed on electrodes. The initialization operation includes initialization operation of generating the initializing discharge in all discharge cells (hereinafter abbreviated as "all-cell initialization operation") and initialization operation of generating the initializing discharge in discharge cells where a sustaining discharge is generated (hereinafter, abbreviated as "selective initialization operation").

In the address period, an addressing discharge is selectively generated to form wall charges in discharge cells for display of an image. In the sustain period, a sustain pulse is alternately applied to pairs of display electrodes, each pair being composed of a scan electrode and a sustain electrode, and the sustaining discharge is generated in the discharge cells where the addressing discharge was generated, thereby emitting light from a phosphor layer of the corresponding discharge cells for display of an image.

As an example of the sub field method, there has been proposed a new driving method of generating an initializing discharge using a smoothly varying voltage waveform and selectively generating an initializing discharge for discharge cells where a sustaining discharge was generated, thereby reducing emission having no relation to gray scale expression as much as possible to improve a contrast ratio.

Specifically, for example, an all-cell initialization operation is performed to discharge all discharge cells in an initialization period of one of a plurality of sub fields, and, in an initialization period of the other sub fields, a selective initialization operation is performed to initialize only discharge cells where a sustaining discharge was generated. As a result, emission having no relation to gray scale expression becomes only emission accompanied with discharge of the all-cell initialization operation, thereby making it possible to display an image having a high contrast (for example see Patent Document 1).

With such driving, emission having no relation to image display, that is, luminance of a black display region when an image is not displayed (hereinafter abbreviated as "black level luminance"), becomes weak emission in the all-cell initialization operation, thereby making it possible to display the image having a high contrast.

On the other hand, as the number of discharge cells increases in accompany with high precision and up-sizing of panels and the number of sub fields increases to improve image display quality, by, for example, alleviating dynamic false contour, there is an increasing need for higher speed address operation.

By the way, the all-cell initialization operation to initialize all the discharge cells combines both functions of forming the wall charges required for the address operation as described above and generating a priming to reduce discharge delay and stabilize addressing discharge. Accordingly, a method of increasing the priming is effective for high speed address operation. However, if the number of sub fields to perform the all-cell initialization operation within one field period (hereinafter referred to as "all-cell initialization number") increases simply, black level luminance increases, and thus, a contrast is lowered, which results in deterioration of image display quality.

Accordingly, there has been proposed a panel driving method of selecting one of an all-cell initialization operation and a selective initialization operation in an initialization period of each sub field and increasing or decreasing the all-cell initialization number based on the selected initialization operation, based on an average picture level (APL) of an image signal to be displayed, thereby making high speed address operation stabilize while suppressing the increase of the black level luminance (for example, see Patent Document 2).

However, with further up-sizing and high precision of panels, there is an increasing need for higher contrast of a display image. Accordingly, there is a need for a panel driving method of displaying an intense image having higher contrast by further suppressing increase of black level luminance.
Patent Document 1: Japanese Unexamined Patent Application Publication No. 2000-242224
Patent Document 2: Japanese Unexamined Patent Application Publication No. 2005-215132

### DISCLOSURE OF THE INVENTION

According to the invention, a plasma display panel driving method is provided in which one field of an image signal includes an all-cell initialization sub field in which an initializing discharge is generated by applying an initialization voltage to all the discharge cells to display the image in an initialization period, and an initialization voltage when an image satisfying predetermined conditions is displayed is set to be lower than an initialization voltage when an image satisfying no predetermined conditions is displayed. According to this method, black level luminance can be further suppressed from rising, and accordingly, an intense image with higher contrast can be displayed.

In the plasma display panel driving method of the invention, the image has an image signal average luminance level of less than an average luminance threshold value and an image signal maximum luminance of more than the maximum luminance threshold value and may be a still image.

In the plasma displaypanel drivingmethod of the invention, the image has a lighting ratio of each sub field of an image signal, the lighting ratio being less than a lighting ratio threshold value, and a lighting ratio of a sub field having the highest luminance weight, the lighting ratio being at least more than 0%, and may be a still image.

According to the invention, a plasma display apparatus is provided including: a panel having a plurality of discharge cells each having a display electrode pair including a scan electrode and a sustain electrode; a scan electrode driving circuit that applies a smoothly rising or falling slopedwaveform voltage to the scan electrode; and an image discriminating circuit that discriminates an image matching predetermined conditions, one field of an image signal including a plurality of sub fields, each having an initialization period in which an initializing discharge is generated in the discharge cells, an address period in which an addressing discharge is generated in the discharge cells, and a sustain period in which a sustaining discharge is generated in the discharge cells in which the addressing discharge is generated, and the one field including an all-cell initialization sub field in which the initializing discharge is generated by applying an initialization voltage to all the discharge cells to display the image in the initialization period. In this apparatus, the scan electrode driving circuit varies the initialization voltage, and, if an image, which is discriminated by the image discriminating circuit that the image is a particular image, is displayed, the initialization voltage is set to be lower than an initialization voltage when the image is not the particular image.

### BRIEF DESCRIPTION OF THE DRAWINGS

Fig. 1 is an exploded perspective view showing a structure of a panel according to an embodiment of the invention.
Fig. 2 is a view showing electrode arrangement of a panel according to the embodiment of the invention.
Fig. 3 is a circuit block diagram of a plasma display apparatus according to the embodiment of the invention.
Fig. 4 is a waveform diagram of driving voltages applied to electrodes of a panel according to the embodiment of the invention.
Fig. 5A is a view showing a structure of sub fields used for an image signal having APL of less than 6% according to the embodiment of the invention.
Fig. 5B is a view showing a structure of sub fields used for an image signal having APL of more than 6% according to the embodiment of the invention.
Fig. 5C is a view showing a structure of sub fields used for a high contrast image signal according to the embodiment of the invention.
Fig. 6 is a view showing an example of measurement for a relationship between an initialization voltage value and its black level luminance when an all-cell initialization number of one field is one according to the embodiment of the invention.
Fig. 7 is a circuit diagram of a scan electrode driving circuit according to the embodiment of the invention.
Fig. 8 is a timing chart for explaining operation of a scan electrode driving circuit in an all-cell initialization period according to the embodiment of the invention.
Fig. 9 is a circuit block diagram of a plasma display apparatus having a lighting ratio detecting circuit that detects a lighting ratio according to another embodiment of the invention.

### DESCRIPTION OF REFERENCE NUMERALS AND SIGNS

- 1:: plasma display apparatus
- 10:: panel
- 21:: (glass) front substrate
- 22:: scan electrode
- 23:: sustain electrode
- 24,: 33: dielectric layer
- 25:: protective layer
- 28:: display electrode pair
- 31:: rear substrate
- 32:: data electrode
- 34:: barrier rib
- 35:: phosphor
- 51:: image signal processing circuit
- 52:: data electrode driving circuit
- 53:: scan electrode driving circuit
- 54:: sustain electrode driving circuit
- 55:: timing generating circuit
- 57:: APL detecting circuit
- 61:: maximum luminance detecting circuit
- 62:: still image detecting circuit
- 63, 66:: image discriminating circuit
- 65:: lighting ratio detecting circuit
- 100:: sustain pulse generating circuit
- 110:: power recovery circuit
- 300:: initialization waveform generating circuit
- 310, 320:: mirror integration circuit
- 400:: scan pulse generating circuit

### PREFERRED EMBODIMENTS FOR CARRYING OUT THE INVENTION

Hereinafter, a plasma display apparatus according to an embodiment of the invention will be described with reference to the accompanying drawings.

### First Embodiment

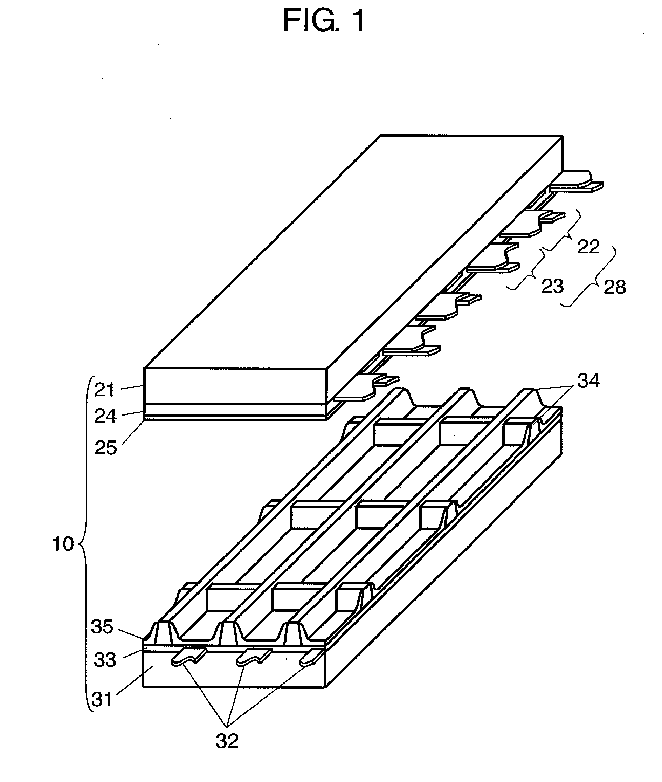

Fig. 1 is an exploded perspective view showing a structure of panel 10 according to an embodiment of the invention. Glass front substrate 21 has a plurality of pairs of display electrodes 28 formed in parallel, each pair being composed of scan electrode 22 and sustain electrode 23. Dielectric layer 24 is formed to cover scan electrode 22 and sustain electrode 23, and protective layer 25 is formed on dielectric layer 24. Rear substrate 31 has a plurality of data electrodes 32, dielectric layer 33 covering data electrodes 32, and well-shaped barrier ribs 34 formed on the dielectric layer. Phosphor layer 35 from which red (R), green (G) and blue (B) color light is emitted is formed on sides of barrier ribs 34 and a surface of dielectric layer 33.

Front substrate 21 and rear substrate 31 are sealed with their circumferences by a sealing material such as glass frit, with display electrode pairs 28 and data electrodes 32 arranged to face and intersect each other with a microscopic discharge space defined therebetween. The discharge space is filled with, for example, mixed gas of neon and xenon as a discharge gas. In this embodiment, a discharge gas having a xenon partial pressure of 10% is used to improve luminance. The discharge space is divided into a plurality of compartments by barrier ribs 34, and discharge cells are formed at intersections of display electrode pairs 28 and data electrodes 32. When these discharge cells are discharged and radiated, an image is displayed.

The structure of panel 10 is not limited to the above-described structure, but may have, for example, stripe-shaped barrier ribs.

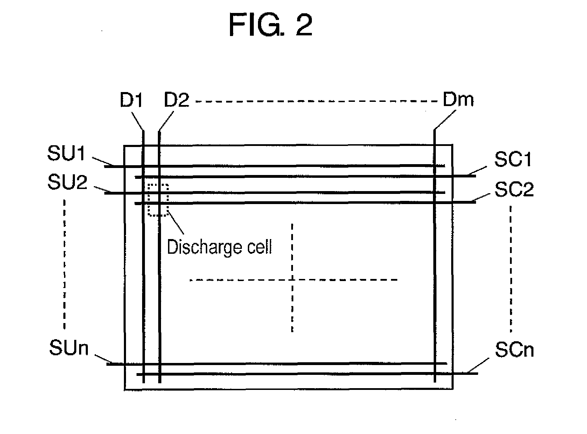

Fig. 2 is a view showing electrode arrangement of panel 10 according to the embodiment of the invention. Panel 10 includes n scan electrodes SC1 to SCn (corresponding to scan electrodes 22 of Fig. 1) and n sustain electrodes SU1 to SUn (corresponding to sustain electrodes 23 of Fig. 1) elongated in a row direction and m data electrodes D1 to Dm (corresponding to data electrodes 32 of Fig. 1) elongated in a column direction. A discharge cell is formed at an intersection of a pair of a scan electrode SCi (i=1 to n) and a sustain electrode SUi and a data electrode Dj (j=1 to m), and mxn discharge cells are formed in the discharge space.

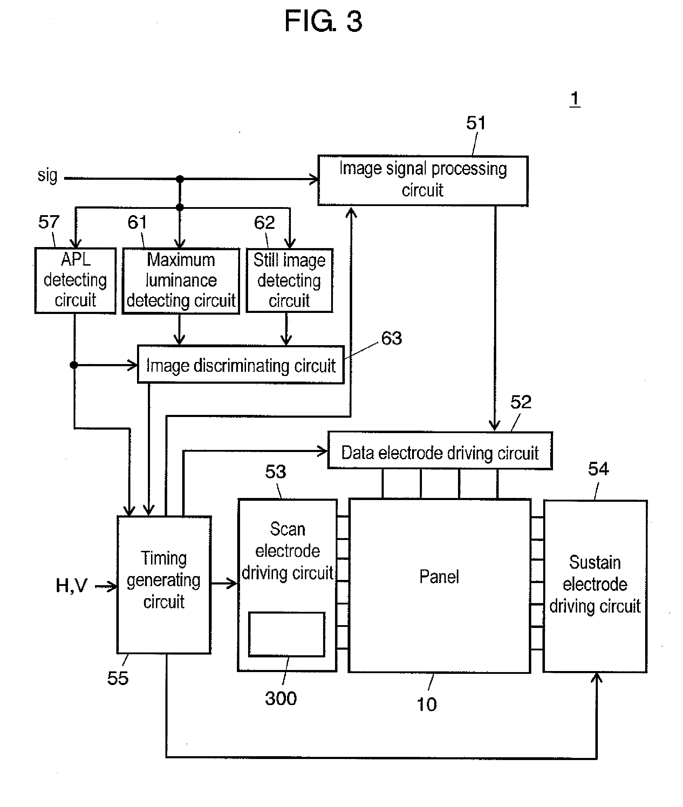

Fig. 3 is a circuit block diagram of plasma display apparatus 1 according to the embodiment of the invention. Plasma display apparatus 1 includes panel 10, image signal processing circuit 51, data electrode driving circuit 52, scan electrode driving circuit 53, sustain electrode driving circuit 54, timing generating circuit 55, APL detecting circuit 57, maximum luminance detecting circuit 61, still image detecting circuit 62, image discriminating circuit 63 and a power supply circuit (not shown) that supplies required power to the above circuit blocks.

Image signal processing circuit 51 converts an input image signal sig into image data representing emission / non-emission for each sub field. The data electrode driving circuit 52 converts the image data for each sub field into a signal corresponding to each of data electrodes D1 to Dm to drive data electrodes D1 to Dm.

APL detecting circuit 57 detects an average luminance level (hereinafter abbreviated as "APL") of image signal sig. Specifically, for example, APL is detected by using a well-known method of accumulating luminance values of image signals over one field period or one frame period. In addition to using the luminance values, APL may be detected by a method of accumulating R, G and B signals over one field period and obtaining an average value of the accumulated RGB signals.

Maximum luminance detecting circuit 61 detects maximum luminance in one field period of image signal sig for each field. Alternatively, maximum luminance detecting circuit 61 may detects maximum luminance in one field period of each of R, G and B signals.

Still image detecting circuit 62 includes a memory (not shown) therein in which image signal sig is stored, determines whether an image to be displayed is a moving picture or a still image using a well-known still image detecting method of comparing current image signal sig with an image signal stored in the memory, and outputs a result of the determination.

Image discriminating circuit 63 discriminates whether or not an image to be displayed is a predetermined image matching predetermined conditions. Specifically, based on results of the detection of APL detecting circuit 57, maximum luminance detecting circuit 61, and still image detecting circuit 62, image discriminating circuit 63 discriminates whether or not an image to be displayed is a still image having conditions of low APL and high maximum luminance (hereinafter, an image satisfying these conditions is referred to as "high contrast image") and outputs a result of the discrimination to timing generating circuit 55. If maximum luminance detecting circuit 61 has a configuration of outputting maximum values of R, G and B signals, image discriminating circuit 63 may compare the maximum values of these signals with maximum luminance threshold values corresponding to these signals and make discrimination of a high contrast signal using logical product of the maximum values and the maximum luminance threshold values.

Timing generating circuit 55 generates various timing signals to control operation of the circuit blocks based on a horizontal synchronization signal H, a vertical synchronization signal V, APL and a result of the discrimination of image discriminating circuit 63, and supplies the generated timing signals to the circuit blocks. In this embodiment, if the image to be displayed is a high contrast image, emission luminance accompanied with an all-cell initialization operation is lowered to increase contrast, which will be described in detail later.

Scan electrode driving circuit 53 includes initialization waveform generating circuit 300 that generates an initialization waveform to be applied to scan electrodes SC1 to SCn in an Initialization period, and drives scan electrodes SC1 to SCn based on a timing signal. Sustain electrode driving circuit 54 drives sustain electrodes SU1 to SUn based on a timing signal.

Next, driving voltage waveforms to drive panel 10 and their operation will be described. Plasma display apparatus 1 expresses gray scales by using a sub field method, that is, dividing one field period into a plurality of sub fields and controlling emission / non-emission of discharge cells for each sub field. Each sub field has an initialization period, an address period and a sustain period. In the initialization period, an initializing discharge is generated and wall charges required for subsequent address operation are formed on electrodes. The initialization operation includes an all-cell initialization operation of generating the initializing discharge in all discharge cells and a selective initialization operation of generating the initializing discharge in discharge cells where a sustaining discharge is generated. In the address period, an addressing discharge is selectively generated in discharge cells to be radiated to form wall charges. In the sustain period, sustain pulses of numbers proportional to luminance weight are alternately applied to display electrode pairs 28 to generate a sustaining discharge to emit light in discharge cells where the addressing discharge is generated. Now, the driving voltage waveforms and their operation in sub fields will be described, and details of the sub fields will be described later.

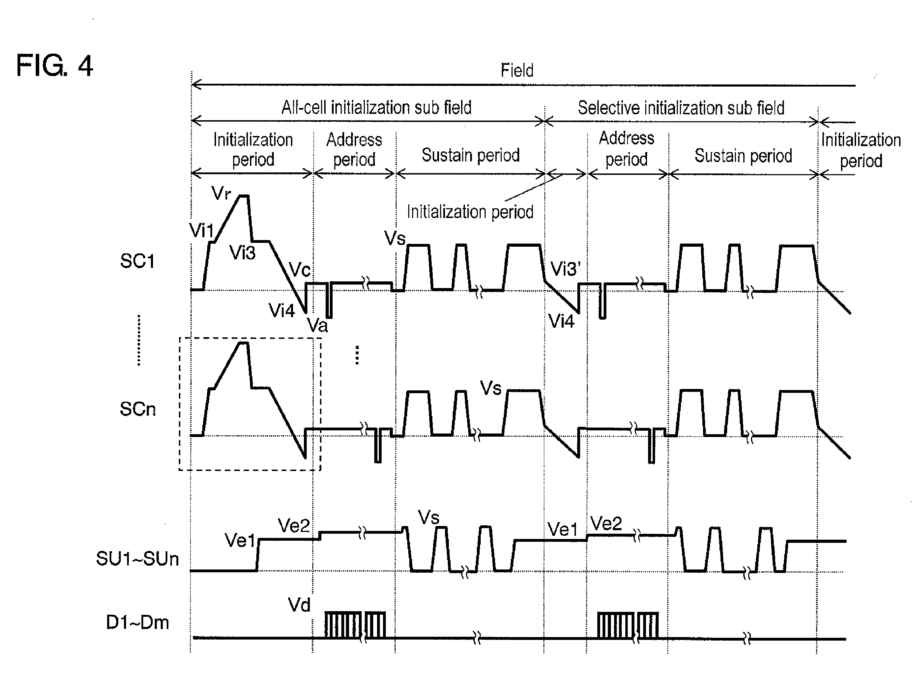

Fig. 4 is a waveform diagram of driving voltages applied to electrodes of panel 10 according to the embodiment of the invention. Fig. 4 shows sub fields in which the all-cell initialization operation is performed and sub fields in which the selective initialization operation is performed.

First, the sub fields for the all-cell initialization operation will be described.

In the first part of the initialization period, 0 (V) is applied to data electrodes D1 to Dm and sustain electrodes SU1 to SUn, and a sloped waveform voltage smoothly rising from voltage Vi1 of less than a discharge initiation voltage to a voltage exceeding the discharge initiation voltage for sustain electrodes SU1 to SUn is applied to scan electrodes SC1 to SCn (hereinafter, the maximum value of a smoothly rising voltage applied to scan electrodes SC1 to SCn in the first part of the initialization period is referred to as "initialization voltage Vr").

During the rising of the sloped waveform voltage, a weak initializing discharge is generated between scan electrodes SC1 to SCn, sustain electrode SU1 to SUn and data electrodes D1 to Dm. A negative wall voltage is accumulated on scan electrodes SC1 to SCn while a positive wall voltage is accumulated on data electrodes D1 to Dm and sustain electrodes SU1 to SUn. The wall voltage on the electrodes refers to a voltage generated by wall charges accumulated on dielectric layer 24, dielectric layer 33, protective layer and phosphor layer 35 covering the electrodes.

In this initializing discharge, the wall voltage is excessively accumulated for predicted optimization of the wall voltage in the subsequent second part of the initialization period. The excessive wall voltage accumulated so can be controlled by initialization voltage Vr. Initialization voltage Vr is not always constant, but is varied if necessary, which will be described later.

In the second part of the initialization period, positive voltage Ve1 is applied to sustain electrodes SU1 to SUn, and a sloped waveform voltage (hereinafter also referred to as "ramp voltage") smoothly falling from voltage Vi3 of less than the discharge initiation voltage to a voltage Vi4 exceeding the discharge initiation voltage for sustain electrodes SU1 to SUn is applied to scan electrodes SC1 to SCn. In the meantime, a weak initializing discharge is generated between scan electrodes SC1 to SCn, sustain electrode SU1 to SUn and data electrodes D1 to Dm. The negative wall voltage on scan electrodes SC1 to SCn and the positive wall voltage on sustain electrodes SU1 to SUn is weakened, and thus, the positive wall voltage on data electrode D1 to Dm is adjusted to a voltage suitable for address operation. Thus, the all-cell initialization operation to perform the initializing discharge for all the discharge cells is completed.

Since the discharge at this time depends on the excessive wall voltage accumulated in the first part of the initialization, if initialization voltage Vr is low and the initial discharge in the first part of the initialization period is weak, the initializing discharge in the second part of the initialization period also becomes weak. On the contrary, if initialization voltage Vr is high, the initializing discharge in both parts of the initialization period becomes strong.

In the subsequent address period, voltage Ve2 is applied to sustain electrodes SU1 to SUn, and voltage Vc is applied to scan electrodes SC1 to SCn. Next, negative scan pulse voltage Va is applied to scan electrode SC1 at a first row while positive address pulse voltage Vd is applied to data electrode Dk (k=1 to m) of discharge cells to be radiated at a first row of data electrodes D1 to Dm. At this time, a voltage difference between an intersection on data electrode Dk and an intersection on scan electrode SC1 is an addition of a difference between external application voltages (Vd-Va) and a difference between a wall voltage on data electrode Dk and a wall voltage on scan electrode SC1, which exceeds the discharge initialization voltage. As the addressing discharge is generated between data electrode Dk and scan electrode SC1 and between sustain electrode SU1 and scan electrode SC1, the positive wall voltage is accumulated on scan electrode SC1 and the negative wall voltage is accumulated on sustain electrode SU1, and thus, the negative wall voltage is also accumulated on data electrode Dk. Thus, the addressing discharge is generated in discharge cells to be radiated at a first row so that the address operation to accumulate a wall voltage on the electrodes is performed. On the other hand, since a voltage at intersections of data electrodes D1 to Dm to which address pulse voltage Vd is not applied and scan electrode SC1 does not exceed the discharge initialization voltage, the addressing discharge is not generated. The address period is completed after the address operation is performed for discharge cells at an n-th row.

In the subsequent sustain period, first, positive sustain pulse voltage Vs is applied to scan electrodes SC1 to SCn while 0 (V) is applied to sustain electrodes SU1 to SUn. Thus, in discharge cells in which the addressing discharge is generated, a difference between a voltage on scan electrode SCi and a voltage on sustain electrode SUi is an addition of sustain pulse voltage Vs and a difference between a wall voltage on scan electrode SCi and a wall voltage on sustain electrode SUi, which exceeds the discharge initialization voltage. Thus, a sustaining discharge is generated between scan electrode SCi and sustain electrode SUi to generate ultraviolet rays which excite phosphor layer 35 to emit light therefrom. As a negative wall voltage is accumulated on scan electrode SCi, a positive wall voltage is accumulated on sustain electrode SUi and data electrode Dk. In discharge cells in which the addressing discharge is not generated in the address period, the sustaining discharge is not generated and the wall voltage at the completion of the initialization period is maintained.

Subsequently, 0 (V) is applied to scan electrodes SC1 to SCn while sustain pulse voltage Vs is applied to sustain electrodes SU1 to SUn. Thus, in the discharge cells in which the sustaining discharge is generated, since the difference between the voltage on sustain electrode SUi and the voltage on scan electrode SCi exceeds the discharge initialization voltage, the sustaining discharge is again generated between sustain electrode SUi and scan electrode SCi, and thus, a negative wall voltage is accumulated on sustain electrode SUi and a positive wall voltage is accumulated on scan electrode SCi. Thereafter, similarly, as sustain pulse of numbers corresponding to multiplication of luminance weight by luminance magnification are alternately applied to scan electrodes SC1 to SCn and sustain electrodes SU1 to SUn and a potential difference is given between electrodes of display electrodes pairs 28, the sustaining discharge continues to be generated in the discharge cells in which the addressing discharge is generated in the address period.

In the last of the sustain period, as a so-called narrow pulse-shaped voltage difference is given between scan electrodes SC1 to SCn and sustain electrodes SU1 to SUn, some or all of the wall voltage on scan electrode SCi and sustain electrode SUi is erased with the positive wall voltage on data electrode Dk left.

Next, operation of sub fields in which the selective initialization operation is performed will be described.

In the initialization period in which the selective initialization operation is performed, voltage Ve1 is applied to sustain electrodes SU1 to SUn, 0 (V) is applied to data electrodes D1 to Dm, and a ramp voltage falling smoothly from voltage Vi3' to voltage Vi4 is applied to scan electrodes SC1 to SCn. Thus, in the discharge cells in which the sustaining discharge is generated in the sustain period of a previous sub field, a weak initializing discharge is generated, and the wall voltage on scan electrode SCi and sustain electrode SUi is weakened. Since the positive wall voltage is sufficiently accumulated on data electrode Dk by the immediately previous sustaining discharge, excessive part of the wall voltage is discharged, and thus, the wall voltage is adjusted to a wall voltage suitable for address operation. On the other hand, no discharge is generated in the discharge cells in which the sustaining discharge is not generated in the previous sub field, and wall charges at the completion of the initialization period of the previous sub field remain unchanged. Like this, the selective initialization operation is operation of selectively generating initializing discharge for the discharge cells in which the sustaining discharge is generated in the sustain period of the immediately previous sub field.

The subsequent address period has the same operation as the address period of the sub field in which the all-cell initialization operation is performed, and therefore, description of which will be omitted. The subsequent sustain period has the same operation as the sustain period of the sub field in which the all-cell initialization operation is performed, except for the number of sustain pulses.

Next, a sub field structure of the driving method of panel 10 according to the embodiment of the invention will be described. In this embodiment, although it is assumed that one field is divided into 10 sub fields (first SF, second SF, ..., tenth SF) and the sub fields have luminance weights (1, 2, 3, 6, 11, 18, 30, 44, 60 and 80), respectively, the number of sub fields and the luminance weights of the sub fields are not limited to the above values.

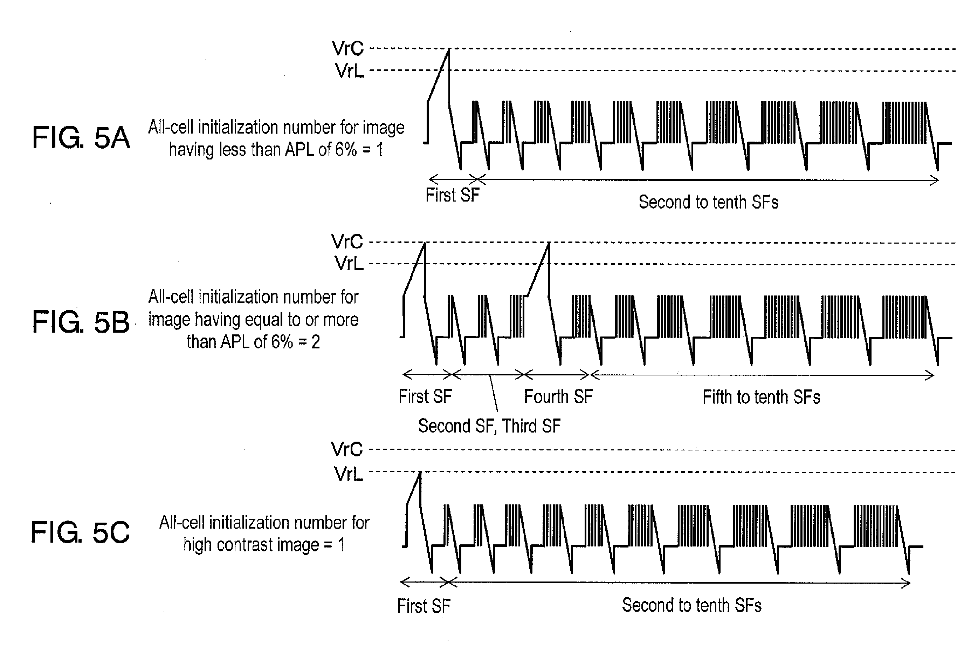

Figs. 5A, 5B and 5C are views showing a sub field structure according to the embodiment of the invention, where each sub field is either a sub field in which the all-cell initialization operation is performed in the initialization period (hereinafter abbreviated as "all-cell initialization sub field") or a sub field in which the selective initialization operation is performed in the initialization period (hereinafter abbreviated as "selective initialization sub field"). Since Figs. 5A, 5B and 5C show one field of the driving voltage waveform of panel 10 roughly, details of waveforms in periods of the sub fields are shown in Fig. 4.

In this embodiment, the sub field structure is changed based on APL of an image signal to be displayed. Fig. 5A shows a sub field structure used for an image signal having APL of less than 6%, where only the first SF is the all-cell initialization sub field and the second to tenth SFs are the selective initialization sub field. Fig. 5B shows a sub field structure used for an image signal having APL of 6% or more, where the first and fourth SFs are the all-cell initialization sub field and the second, third and fifth to tenth SFs are the selective initialization sub field. That is, the sub fields are so constructed that the all-cell initialization number is one if APL is less than 6%, and the all-cell initialization number is two if APL is 6% or more. The following Table 1 shows a relationship between the above-described sub field structure and APL.

**Table 1**

| APL | All-cell initialization number | All-cell initialization SF |
|---|---|---|
| Less than 6% | 1 | 1 |
| 6% or more | 2 | 1, 4 |

Next, a case where an image to be displayed is a high contrast image will be described.

In this embodiment, if APL is less than 4% as an average luminance threshold value, the maximum luminance is 94% or more as a maximum luminance threshold value and an image as a still image is detected as a high contrast image. An example of the high contrast image may include, for example, a night sky image having the moon or stars, an image having white characters displayed with a dark screen as a background. Although not so high in display frequency, these images are images having high luminance of a small area with a region having low luminance of a large area as a background and having a significant contrast improvement effect. Since such images have a large black display region and are still images, an address operation can be stably performed even with a small amount of priming, and initialization voltage Vr for initializing discharge can be lowered. That is, if an average luminance level of an image signal is less than the average luminance threshold value, the maximum luminance of the image signal is equal to or more than the maximum luminance threshold value and the image signal represents an still image, initialization voltage Vr for initializing discharge can be lowered. Thus, a luminance level of black level luminance can be lowered to obtain a significant contrast improvement effect.

Fig. 5C is a view showing a sub field structure used for a high contrast image signal. Since an image discriminated as a high contrast image by image discriminating circuit 63 has APL of less than 4%, only the first SF is the all-cell initialization sub field and the second to tenth SFs are the selective initialization sub field. Fig. 5C is different from Fig. 5A in that initialization voltage Vr in the all-cell initialization operation is lowered to suppress black float of black level luminance in a display image, thereby raising contrast. That is, if an image other than the high contrast image is displayed, initialization voltage Vr is voltage value VrC, and if the high contrast image is displayed, initialization voltage Vr is voltage value VrL lower than voltage value VrC.

In this manner, when the high contrast image is displayed, since the address operation can be stably performed even with a small amount of priming, initialization voltage Vr can be set to be low, thereby further suppressing black level luminance.

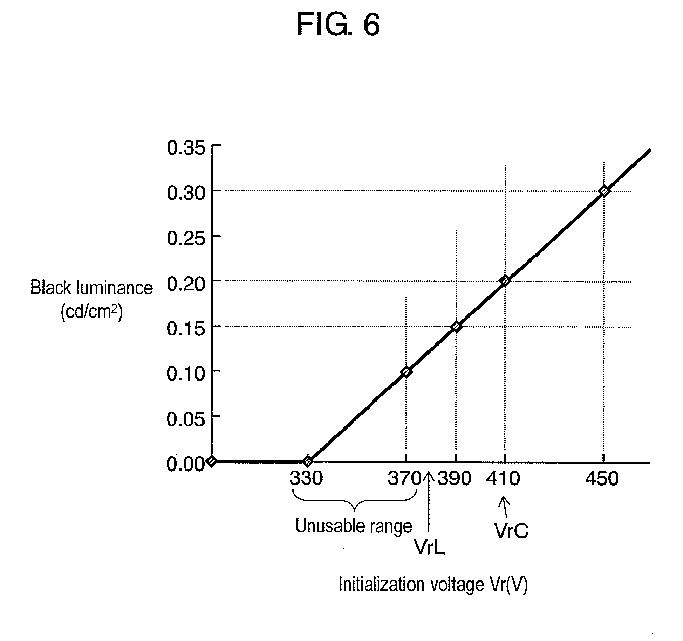

Next, a method of setting voltage value VrL and voltage value VrC of initialization voltage Vr will be described. Fig. 6 is a view showing an example of measurement for a relationship between a value of initialization voltage Vr and its black level luminance when the all-cell initialization number of one field is one according to the embodiment of the invention. In the example of measurement of panel 10, if initialization voltage Vr is less than 330 (V), discharge is not generated, and accordingly, the black level luminance is 0 (cd/cm²). If initialization voltage Vr is 330 (V) or more, the black level luminance increases at the rate of about 0.05 (cd/cm²) every time initialization voltage Vr increases by 20 (V). The black level luminance is 0.1 (cd/cm²) if initialization voltage Vr is 370 (V), the black level luminance is 0.15 (cd/cm²) if initialization voltage Vr is 390 (V), the black level luminance is 0.2 (cd/cm²) if initialization voltage Vr is 410(V), and the black level luminance is 0.3 (cd/cm²) if initialization voltage Vr is 450 (V).

In this manner, the black level luminance increases as initialization voltage Vr increases, however, there is a possibility of unusual discharge in the all-cell initialization operation when initialization voltage Vr is between 330 (V) and 370 (V). If unusual discharge is generated in any discharge cell, unusual wall charges are accumulated in the discharge cell, and accordingly, there occurs a false discharge phenomenon that a sustaining discharge is generated in a sustain period (hereinafter abbreviated as "unusual initialization") irrespective of a addressing discharge subsequent to the accumulation, which results in remarkable deterioration of image display quality. Accordingly, it is not preferable to set initialization voltage Vr to a voltage at which the unusual initialization is likely to occur.

Thereupon, voltage value VrL of initialization voltage Vr for display of the high contrast image is set to 380 (V). Voltage value VrC of initialization voltage Vr for display of an image other than the high contrast image is set to 410 (V) to supply sufficient priming. Thus, while black level luminance for display of a normal image is 0.2 (cd/cm²), black level luminance for display of the high contrast image can be restricted to 0.12 (cd/cm²). Also, a contrast ratio can be improved up to the maximum of ratio of 10000 : 1.

In this embodiment, while a normal image is changed to a high contrast image, initialization voltage Vr is not changed to voltage value VrL, but decreases step by step from voltage value VrC to voltage value VrL. Time taken to decrease from voltage value VrC to voltage value VrL is set to 0.2 second. This is for avoiding sudden variation of black level luminance.

Next, a method of controlling initialization voltage Vr in the all-cell initialization operation will be described. Initialization voltage Vr may be varied according to various methods including a method of increasing voltage Vi1 of scan electrode SC1 of Fig. 4, a method of increasing voltage Vi2 by steepening a rising slope from voltage Vi1 to voltage Vi2, etc. Hereinafter, an example of the methods will be described with reference to the accompanying drawings.

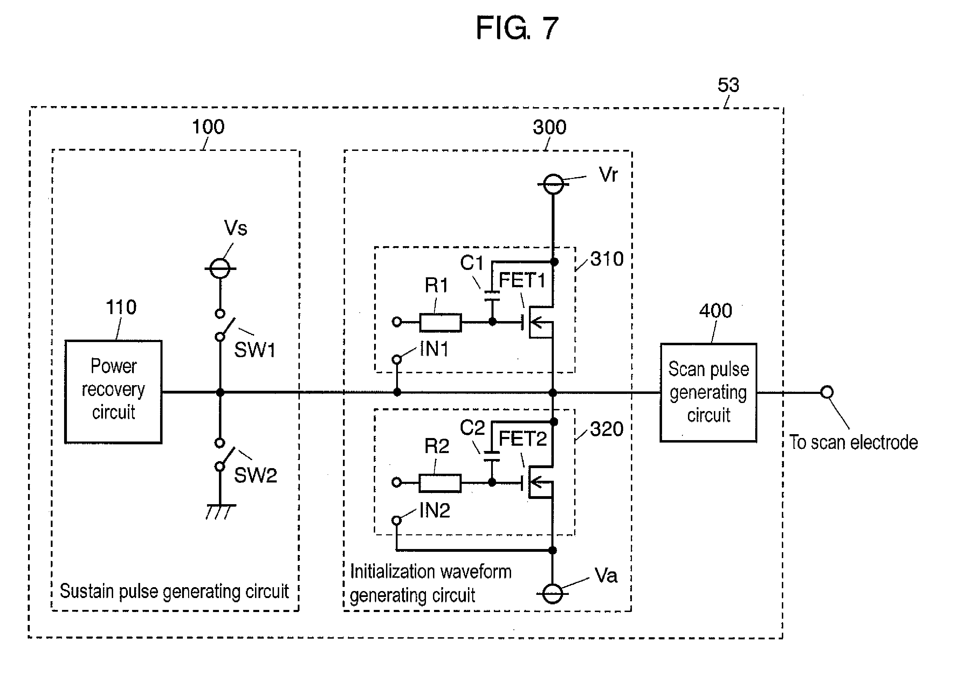

Fig. 7 is a circuit diagram of scan electrode driving circuit 53 according to the embodiment of the invention. Scan electrode driving circuit 53 includes sustain pulse generating circuit 100 that generates a sustain pulse, initialization waveform generating circuit 300 that generates an initialization waveform, and scan pulse generating circuit 400 that generates a scan pulse.

Sustain pulse generating circuit 100 includes power recovery circuit 110 that recovers and reuses power when scan electrodes 22 are driven, switching device SW1 that clamps scan electrodes 22 to voltage Vs, and switching device SW2 that clamps scan electrodes 22 to 0 (V). Scan pulse generating circuit 400 sequentially applies the scan pulse to scan electrodes 22 in an address period. Scan pulse generating circuit 400 outputs a voltage waveform of sustain pulse generating circuit 100 or initialization waveform generating circuit 300, as it is, in an initialization period and a sustain period.

Initialization waveform generating circuit 300 includes mirror integration circuit 310 and mirror integration circuit 320 and controls initialization voltage Vr in the all-cell initialization operation while generating the above-described initialization waveform. Mirror integration circuit 310 includes field effect transistor FET1, capacitor C1 and resistor R1 and generates a sloped waveform voltage rising smoothly in a ramp shape to predetermined initialization voltage Vr, while mirror integration circuit 320 includes field effect transistor FET2, capacitor C2 and resistor R2 and generates a sloped waveform voltage falling smoothly in a ramp shape to voltage Vi4. Also, Fig. 7 shows input terminals IN1 and IN2 of mirror integration circuit 310 and mirror integration circuit 320, respectively.

Although mirror integration circuit 310 and mirror integration circuit 320 using practical and simple field effect transistors are employed for initialization waveform generating circuit 300 in this embodiment, initialization waveform generating circuit 300 is not limited to this configuration, but may be any circuits as long as the circuits can generate a sloped waveform voltage while controlling initialization voltage Vr.

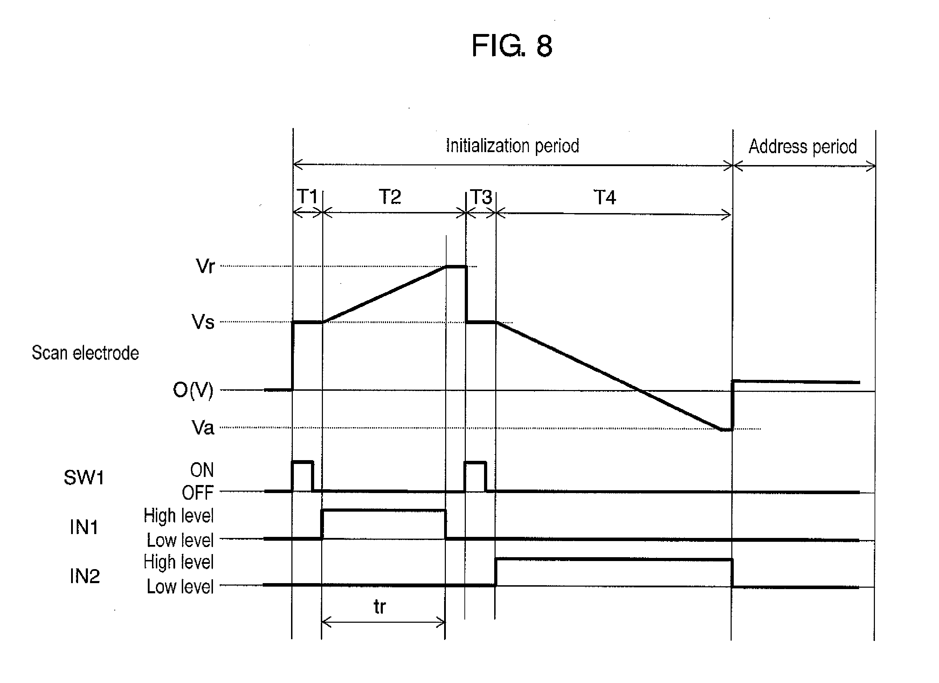

Next, operation of initialization waveform generating circuit 300 will be described. Fig. 8 is a timing chart for explaining operation of scan electrode driving circuit 53 in the all-cell initialization period according to the embodiment of the invention. In this embodiment, a driving voltage waveform for all-cell initialization operation is divided into four time intervals T1 to T4, each of which will be described below.

It is here assumed that voltage Vi1 and voltage Vi3 are equal to voltage Vs. In the following description, operation to conduct a switching device is indicated as "turn on" while operation to interrupt a switching device is indicated as "turn off".

### Time interval T1

First, switching device SW1 of sustain pulse generating circuit 100 is turned on. Then, voltage Vs is applied to scan electrode 22 through switching device SW1. Thereafter, switching device SW1 is turned off.

### Time interval T2

Next, input terminal IN1 of mirror integration circuit 310 goes to "high level". Specifically, for example, voltage of 15 (V) is applied to input terminal IN1. Then, constant current flows from resistor R1 into capacitor C1, and accordingly, a source voltage of FET1 rises in a ramp shape and an output voltage of scan electrode driving circuit 53 also begins to rise in a ramp shape. This voltage rising continues while input terminal IN1 is in "high level".

When the output voltage rises up to required initialization voltage Vr, input terminal IN1 goes to "low level".

Thus, scan electrodes 22 are applied with a ramp voltage rising smoothly from voltage Vs (being equal to voltage Vi1, voltage Vi3 and voltage Vi3' in this embodiment) of not more than a discharge initialization voltage to initialization voltage Vr (being equal to voltage Vi2 in this embodiment) exceeding the discharge initialization voltage.

At this time, initialization voltage Vr can be raised if time interval tr for which input terminal IN1 is in "high level" is set to be long, while initialization voltage Vr can be lowered if time interval tr is set to be short.

### Time interval T3

Next, switching device SW1 of sustain pulse generating circuit 100 is turned on. Then, a voltage of scan electrodes 22 is lowered up to voltage Vs. Thereafter, switching device SW1 is turned off.

### Time interval T4

Next, input terminal IN2 of mirror integration circuit 320 goes to "high level". Specifically, for example, voltage of 15 (V) is applied to input terminal IN2. Then, constant current flows from resistor R2 into capacitor C2, and accordingly, a drain voltage of FET2 falls in a ramp shape and an output voltage of scan electrode driving circuit 53 also begins to fall in a ramp shape. After the output voltage reaches negative voltage Vi4, input terminal IN2 goes to "low level".

Thus, scan electrodes 22 are applied with a ramp voltage rising smoothly from voltage Vi1 of not more than the discharge initialization voltage to initialization voltage Vr exceeding the discharge initialization voltage, and thereafter, are applied with a ramp voltage falling smoothly from voltage Vi3 to voltage Vi4.

In Figs. 5A, 5B and 5C, initialization voltage VrL may be applied by shortening time interval tr for which input terminal IN1 of scan electrode driving circuit 53 of Fig. 8 is in "high level", while initialization voltage VrC may be applied by lengthening time interval tr.

Although it has been illustrated in this embodiment that the high contrast image is detected using APL, a ratio of the number of discharge cells to be lighted to the total number of discharge cells (hereinafter abbreviated as "lighting ratio") may be used instead of APL.

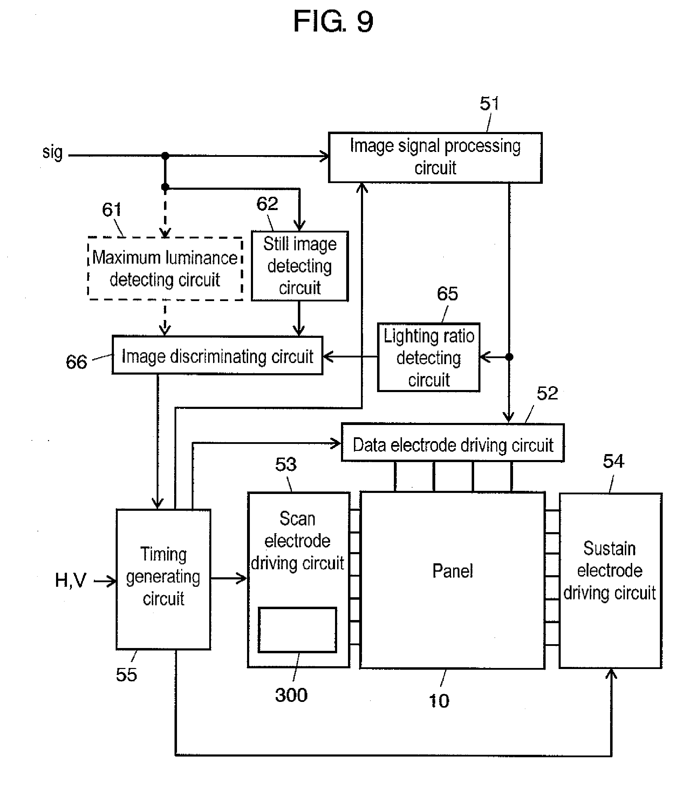

Fig. 9 is a circuit block diagram of the plasma display apparatus having lighting ratio detecting circuit 65 that detects a lighting ratio according to another embodiment of the invention. Lighting ratio detecting circuit 65 detects a lighting ratio for each sub field based on image data for each sub field. Image discriminating circuit 66 may discriminate that an image is a high contrast image if lighting ratios of particular sub fields, which is detected by lighting ratio detecting circuit 65, are less than a lighting ratio threshold value, if the maximum luminance detected by maximum luminance detecting circuit 61 is equal to or more than the maximum luminance threshold value, and if still image detecting circuit 62 determines that the image is a still image. For example, several sub fields having high luminance weight may be selected as the particular sub fields, and an image having low APL can be detected by, for example, setting a lighting ratio of the tenth SF to be less than 1%, a lighting ratio of the ninth SF to be less than 2%, ..., etc. Alternatively, lighting ratios of all sub fields may be detected and it may be discriminated that an image is a high contrast image under conditions that the lighting ratios of all sub fields are less than 4%.

When lighting ratio detecting circuit 65 is used, maximum luminance detecting circuit 61 may be omitted. Specifically, for example, image discriminating circuit 66 may discriminate that an image is a high contrast image if lighting ratios of particular sub fields, which is detected by lighting ratio detecting circuit 65, are less than a lighting ratio threshold value, if at least a lighting ratio of a sub field having the highest luminance weight is more than 0%, and if still image detecting circuit 62 determines that the image is a still image. In this manner, for example, by detecting that lighting ratios of several sub fields having high luminance weight, for example, the seventh to tenth SFs, are not 0%, an image having the highest luminance can be detected.

When a plurality of image display modes, such as a cinema mode, a standard mode, a dynamic mode and so on in which an image is displayed with brightness or contrast changed, are set, the control for display of the high contrast image in this embodiment may be performed only in the dynamic mode in which an image is displayed with the highest contrast.

Although it has been illustrated in this embodiment that APL, the maximum luminance and the like are detected from an image signal of one field period, APL, the maximum luminance and the like may be detected from an image signal of one frame period.

If the plasma display apparatus includes a thermal detecting unit that detects internal temperature of a panel or a case, initialization voltage Vr for display of the high contrast image may be controlled in combination with a result of temperature detection by the thermal detecting unit. For example, if the detected temperature is not more than predetermined temperature, a control to lower initialization voltage Vr to increase contrast is not performed, while this control may be performed if the detected temperature is more than the predetermined temperature.

Various numerical values used in this embodiment are provided as an example, and are preferably set to be optimal according to panel characteristics or device specification.

### INDUSTRIAL APPLICABILITY

The plasma display panel driving method and the plasma display apparatus of the invention are capable of displaying an intense image with higher contrast by further suppressing black level luminance from rising.

## Claims

1. A method of driving a plasma display panel to display an image signal, one field of the image signal including a plurality of sub fields, each having an initialization period in which an initializing discharge is generated in a discharge cell having a display electrode pair formed of a scan electrode and a sustain electrode, an address period in which an addressing discharge is generated in the discharge cell, and a sustain period in which a sustaining discharge is generated in the discharge cell in which the addressing discharge has been generated, and
the sub fields including:
an all-cell initialization sub field in which an initialization voltage to generate the initializing discharge for all discharge cells to display an image is applied; or
a selective initialization sub field in which the initializing discharge is selectively generated in the discharge cell in which the sustaining discharge is generated in an immediately previous sub field,
wherein, if an average luminance level of the image signal is less than an average luminance threshold value, if the maximum luminance of the image signal is equal to or more than the maximum luminance threshold value, and if the image signal is a still image, the initialization voltage is set to be lower than an initialization voltage when the image signal other than the still image is displayed.

2. A method of driving a plasma display panel to display an image signal, one field of the image signal including a plurality of sub fields, each having an initialization period in which an initializing discharge is generated in a discharge cell having a display electrode pair formed of a scan electrode and a sustain electrode, an address period in which an addressing discharge is generated in the discharge cell, and a sustain period in which a sustaining discharge is generated in the discharge cell in which the addressing discharge has been generated, and
the sub fields including:
an all-cell initialization sub field in which an initialization voltage to generate the initializing discharge for all discharge cells to display an image is applied; or
a selective initialization sub field in which the initializing discharge is selectively generated in the discharge cell in which the sustaining discharge is generated in an immediately previous sub field,
wherein, if a lighting ratio of each sub field of the image signal is less than a lighting ratio threshold value, and if an image signal, in which a lighting ratio of a sub field having the highest luminance weight is at least more than 0%, is displayed, the initialization voltage is set to be lower than an initialization voltage when an image signal having equal to or more than the lighting ratio threshold value is displayed.

3. A plasma display apparatus comprising:
a plasma display panel having a plurality of discharge cells each having a display electrode pair formed of a scan electrode and a sustain electrode;
a scan electrode driving circuit that applies a smoothly rising or falling slopedwaveform voltage to the scan electrode; and
an image discriminating circuit that discriminates an image to be displayed is a predetermined image matching predetermined conditions,
wherein one field of an image signal includes a plurality of sub fields, having an initialization period in which an initializing discharge is generated in the discharge cells, an address period in which an addressing discharge is generated in the discharge cells, and a sustain period in which a sustaining discharge is generated in the discharge cells in which the addressing discharge has been generated,
wherein the one field includes an all-cell initialization sub field in which the initializing discharge is generated by applying an initialization voltage to all the discharge cells to display the image in the initialization period, and
wherein the scan electrode driving circuit varies the initialization voltage, and, if an image signal as the predetermined image signal, which is discriminated by the image discriminating circuit that an average luminance level of the image signal is less than an average luminance threshold value, the maximum luminance of the image signal is equal to or more than the maximum luminance threshold value, and the image signal is a still image, is displayed, the initialization voltage is set to be lower than an initialization voltage when an image signal other than the still image is displayed.

4. A plasma display apparatus comprising:
a plasma display panel having a plurality of discharge cells each having a display electrode pair formed of a scan electrode and a sustain electrode;
a scan electrode driving circuit that applies a smoothly rising or falling sloped waveform voltage to the scan electrode; and
an image discriminating circuit that discriminates an image to be displayed is a predetermined image matching predetermined conditions,
wherein one field of an image signal includes a plurality of sub fields, having an initialization period in which an initializing discharge is generated in the discharge cells, an address period in which an addressing discharge is generated in the discharge cells , and a sustain period in which a sustaining discharge is generated in the discharge cells in which the addressing discharge has been generated,
wherein the one field includes an all-cell initialization sub field in which the initializing discharge is generated by applying an initialization voltage to all the discharge cells to display the image in the initialization period, and
wherein the scan electrode driving circuit varies the initialization voltage, and, if an image signal as the predetermined image signal, which is discriminated by the image discriminating circuit that a lighting ratio of each sub field of the image signal as the image is less than a lighting ratio threshold value and a lighting ratio of a sub field having the highest luminance weight is at least more than 0%, is displayed, the initialization voltage is set to be lower than an initialization voltage when an image signal having equal to or more than the lighting ratio threshold value is displayed.
